# FASCICULE DE BREVET EUROPEEN

(11) **EP 2 785 029 B1**
(45) Date de publication et mention de la délivrance du brevet: **23.03.2016**
(21) Numéro de dépôt: 14162376.9
(22) Date de dépôt: 28.03.2014
(51) Int. Cl.: H04M 3/42, H04M 1/57

(54) **Procédé et dispositif de transmission d'un appel masqué, procédé et dispositif de réception d'un appel masqué, signal de transmission d'un appel masqué, et programme d'ordinateur correspondant**
Verfahren und Vorrichtung zur Übertragung eines versteckten Anrufs, Verfahren und Vorrichtung zum Empfangen eines versteckten Anrufs, Signalübertragung von einem versteckten Anruf und entsprechendes Computerprogramm.
Method and apparatus for transmission of a hidden call, method and apparatus for receiving a hidden call, signal transmission of a hidden call and corresponding computer program.

(30) Priorité: 29.03.2013 FR 1352893
(43) Date de publication de la demande: 01.10.2014
(73) Titulaire: Orange, 75015 Paris (FR)
(72) Inventeur: Tamagnan, Philippe, 91400 Orsay (FR)
(74) Mandataire: Vidon Brevets & Stratégie

(56) Documents cités:
- WO-A1-2011/154221
- WO-A1-2012/143052

## Description

### 1. Domaine de l'invention

Le domaine de l'invention est celui des communications entre différents terminaux de communication.

Plus précisément, l'invention concerne la gestion des appels « masqués », selon lesquels l'identité de l'émetteur d'un appel n'est pas communiquée au destinataire de l'appel.

Encore plus précisément, l'invention propose une solution permettant à un appelé « d'identifier » un appelant émettant un appel masqué, avec une certaine probabilité.

L'invention trouve des applications dans tout système de communication mettant en oeuvre des terminaux de communication (de type téléphone, ordinateur, tablette tactile, etc.), et notamment dans le domaine de la téléphonie et des télécommunications.

### 2. Art antérieur

D'un premier côté, un premier usager A peut souhaiter disposer d'un service de type « non identification du demandeur en phase d'appel » (en anglais « CLIR » pour « Calling Line Identification Restriction ») afin de ne pas divulguer son identité. Un cas d'usage est d'éviter de communiquer son identité téléphonique (par exemple, son numéro de téléphone) à des entreprises commerciales. Ce service est adivable à la demande, mais est le plus souvent configuré de manière permanente dans le réseau téléphonique. Ce dernier cas (« mode permanent ») n'est généralement pas modifiable par l'usager. D'ailleurs, les commandes d'activation ou de modification de service sont mal connues des usagers, lesquels établissent en général des appels en se fondant sur la configuration par défaut du terminal et du réseau.

D'un autre côté, un deuxième usager B peut choisir, notamment pour protéger sa vie privée, de ne jamais accepter d'appels provenant d'identités masquées à l'aide du service précédent.

Or il peut arriver que les usagers A et B se connaissent, mais n'arrivent pas à établir une communication téléphonique, l'usager A ne pouvant entrer en communication avec l'usager B qu'en désactivant le service de type CLIR temporairement, ou en appelant avec une autre ligne.

Une autre solution est fournie par WO 2011/154221 où le numéro de l'appelant est cryptée et envoyée à la partie appelée dans un premier appel. L'appelé enregistre le numéro de l'appelant cryptée dans son répertoire. Au prochain appel, le numéro de l'appelant crypté est trouvé et le numéro de l'appelant est affiché à l'appelé.

Une solution usuelle à ce problème, fournie par les opérateurs téléphoniques, est pour l'usager B de souscrire à un service en terminaison déclenchant un dialogue vocal préalable avec l'appelant A, invitant ce dernier à décliner son identité verbalement. La réponse vocale de l'appelant A est alors enregistrée, puis présentée à l'appelé B, lequel choisit ou non d'accepter l'appel.

Un inconvénient de cette solution est qu'elle repose sur une souscription volontaire à ce service, qui peut présenter un obstacle pour les usagers. En particulier, la souscription à un tel service est payante.

De plus, une telle solution peut être complexe à mettre en oeuvre, notamment pour des personnes ne disposant pas de toutes leurs facultés (par exemple des personnes âgées), qui peuvent ne pas comprendre le message les invitant à décliner leur identité, notamment lorsqu'elles sont en détresse.

Il existe donc un besoin pour une nouvelle solution permettant à un appelé d'identifier, au moins avec une certaine probabilité, un appelant émettant un appel masqué, mais sans violation des dispositions légales concernant le secret d'appel.

### 3. Exposé de l'invention

L'invention propose une solution nouvelle qui ne présente pas l'ensemble des inconvénients de l'art antérieur, sous la forme d'un procédé de transmission d'un appel d'un émetteur vers un destinataire, selon lequel l'identité de l'émetteur est masquée pour le destinataire, dit appel masqué.

Selon l'invention, un tel procédé met en oeuvre les étapes suivantes :
- génération d'un jeton non inversible d'identification de l'émetteur, à partir d'un identifiant de l'émetteur ; et
- transmission au destinataire de l'appel masqué et du jeton d'identification.

L'invention propose ainsi une nouvelle solution pour la transmission d'un appel masqué, reposant sur la transmission d'un jeton d'identification non inversible, conjointement à l'appel masqué. Côté destinataire, un tel jeton d'identification pourra être utilisé pour déterminer, avec une certaine probabilité, si l'émetteur est connu du destinataire, en se fondant sur une liste de contacts contenue dans un répertoire du terminal destinataire.

En d'autres termes, une telle solution permet à un émetteur d'appeler un destinataire en maintenant son masquage d'identité, tout en étant reconnu par le destinataire. Ledit identifiant de l'émetteur pourra par exemple être le numéro de téléphone (en clair) de l'émetteur, ou une partie de ce numéro en supprimant par exemple quelques chiffres en milieu ou à une extrémité du numéro de téléphone complet ; l'utilisation d'une partie du numéro de téléphone de l'émetteur permet, si on le souhaite, de garantir le respect de l'anonymat de l'émetteur. Ledit identifiant de l'émetteur pourra selon un autre exemple être une chaîne de caractères, correspondant par exemple au nom de l'émetteur.

Cette solution présente notamment l'avantage de ne nécessiter aucun dialogue préalable entre l'émetteur et le destinataire. De plus, elle ne nécessite pas la souscription à un service, ou l'enregistrement d'un identifiant de l'émetteur dans une liste blanche ou une liste noire. Finalement, elle permet à l'émetteur de conserver son anonymat lorsqu'il téléphone à des entreprises commerciales par exemple, qui ne peuvent a priori pas retrouver son identité, et de « lever son anonymat » lorsqu'il téléphone à des amis, qui peuvent a priori l'identifier.

En particulier, un tel jeton d'identification est généré en utilisant une fonction dite « à sens unique », prenant en entrée l'identifiant de l'émetteur. De ce fait, un tel jeton d'identification est facilement calculable côté émetteur, mais il n'est pas possible (ou difficile) de retrouver exactement l'identité de l'émetteur côté destinataire, en appliquant une fonction inverse. Il est donc non inversible.

En plus d'être non inversible, l'algorithme choisi pour calculer le jeton d'identification doit de préférence posséder une probabilité absolue de collision entre deux identités distinctes suffisamment importante pour interdire de violer le principe de l'anonymat de l'émetteur. De la sorte, l'identité de l'émetteur n'est pas divulguée, mais simplement présumée.

Selon un mode de réalisation particulier, l'étape de génération d'un jeton d'identification tient également compte d'une graine.

Une telle graine (en anglais « seed ») permet notamment d'ajouter de la diversité au jeton d'identification. De ce fait, un tel jeton d'identification est difficilement rejouable. En d'autres termes, l'utilisation d'une graine permet de diminuer le risque d'une réutilisation frauduleuse du jeton d'identification au cas où les jetons d'identification sont stockés dans une mémoire du terminal du destinataire, même si un jeton d'identification est intercepté par un intrus.

Selon une caractéristique particulière, le procédé de transmission comprend une étape préalable de construction de la graine, à partir d'une information temporelle et/ou d'un nombre aléatoire. Par exemple, l'information temporelle est de type date et heure.

On évite de cette façon toute prédictibilité de la graine, et donc du jeton d'identification, ce qui permet de garantir la sécurité de la transmission.

Selon encore une autre caractéristique particulière, une nouvelle graine est générée à chaque nouvel appel à transmettre.

On s'assure de cette façon que le jeton d'identification, généré à partir d'un identifiant de l'émetteur et de la graine, est unique.

En particulier, le procédé de transmission selon l'invention comprend une étape de transmission de la graine. Le destinataire reçoit donc directement la graine et n'a pas besoin de la générer de son côté.

Selon une variante, la graine est également générée au niveau du destinataire.

Selon un mode de réalisation de l'invention, l'étape de génération met en oeuvre une fonction de hachage, délivrant un condensé représentatif d'un identifiant de l'émetteur.

Une telle fonction de hachage peut être appliquée par exemple au numéro de téléphone complet de l'émetteur, ou à une partie de ce numéro de téléphone (par exemple en supprimant quelques chiffres, en milieu ou à une extrémité du numéro de téléphone complet).

Par exemple, une telle fonction de hachage est une fonction de hachage cryptographique sécurisée de type SHA1, SHA2, SHA3, SHA2556 (en anglais « Secure Hash Algorithm »). Elle peut être appliquée directement à l'identifiant de l'émetteur, ou à une concaténation de la graine et de l'identifiant de l'émetteur.

Selon un autre exemple, une telle fonction de hachage est de type HMAC (en anglais « Keyed-Hash Message Authentication Code », en français « code d'authentification d'une empreinte cryptographique de message avec clé »). Dans ce cas, la graine peut jouer le rôle de clé, et l'identifiant de l'émetteur jouer le rôle du message à coder.

Selon une caractéristique particulière, le jeton d'identification est obtenu en supprimant au moins un élément du condensé. Une telle suppression peut être effectuée au début ou à la fin du condensé, et être mise en oeuvre de façon fixe ou aléatoire.

A nouveau, cette opération permet de garantir l'anonymat de l'émetteur.

Selon un autre aspect, l'invention concerne un dispositif de transmission d'un appel d'un émetteur vers un destinataire, selon lequel l'identité de l'émetteur est masquée pour le destinataire, dit appel masqué.

Selon l'invention, un tel dispositif comprend :
- un module de génération d'un jeton non inversible d'identification de l'émetteur, à partir d'un identifiant de l'émetteur ; et
- au moins un module de transmission au destinataire de l'appel masqué et du jeton d'identification.

Un tel dispositif de transmission est notamment adapté à mettre en oeuvre le procédé de transmission décrit précédemment.

Un tel dispositif peut être intégré à un terminal de type téléphone (portable ou fixe), ordinateur (portable ou fixe), tablette, etc. Il peut également être intégré à un équipement tiers du réseau de transmission.

Ce dispositif pourra bien sûr comporter les différentes caractéristiques relatives au procédé de transmission selon l'invention, qui peuvent être combinées ou prises isolément. Ainsi, les caractéristiques et avantages de ce dispositif sont les mêmes que ceux du procédé de transmission. Par conséquent, ils ne sont pas détaillés plus amplement.

L'invention concerne par ailleurs un signal de transmission d'un appel d'un émetteur vers un destinataire, selon lequel l'identité de l'émetteur est masquée pour le destinataire, dit appel masqué.

Selon l'invention, un tel signal comprend un champ spécifique portant au moins un jeton non inversible d'identification dudit émetteur, généré à partir d'un identifiant dudit émetteur, et portant également l'appel masqué.

Un tel signal peut être généré et transmis en utilisant le procédé de transmission décrit précédemment. En particulier, un tel signal peut également présenter un autre champ portant la graine, si elle est transmise au destinataire.

Ce signal pourra bien sûr comporter les différentes caractéristiques relatives au procédé de transmission selon l'invention.

En particulier, si le jeton d'identification n'est pas généré par le terminal de l'émetteur, le signal porte au moins un indicateur implicite ou explicite autorisant le calcul d'un jeton d'identification par un équipement tiers du réseau de transmission.

L'invention concerne par ailleurs un procédé de réception d'un appel émis par un émetteur vers un destinataire, selon lequel l'identité de l'émetteur est masquée pour le destinataire, dit appel masqué.

Selon l'invention, un tel procédé met en oeuvre les étapes suivantes :
- réception d'un appel masqué et d'un jeton non inversible d'identification de l'émetteur, généré à partir d'un identifiant de l'émetteur;
- génération d'au moins un jeton de contrôle, à partir d'au moins un identifiant présent dans un répertoire du destinataire ;
- comparaison du jeton d'identification et du ou des jetons de contrôle ; et
- en cas de détection d'au moins une portion identique entre le jeton d'identification et un des jetons de contrôle, restitution au destinataire soit d'une information représentant l'identifiant de l'émetteur, soit d'une mention indiquant la présence de l'identifiant de l'émetteur dans ledit répertoire du destinataire.

Un tel procédé est notamment adapté à recevoir un appel émis selon le procédé de transmission décrit précédemment.

L'invention propose ainsi de comparer un jeton d'identification de l'émetteur, avec au moins un jeton de contrôle construit à partir d'un identifiant présent dans le répertoire du destinataire, afin de déterminer, avec une certaine probabilité, si un identifiant de l'émetteur est présent dans ce répertoire. Ledit identifiant de l'émetteur pourra par exemple être le numéro de téléphone (en clair) de l'émetteur, ou une partie de ce numéro. Selon un autre exemple, l'identifiant de l'émetteur pourra être une chaîne de caractères.

SI tel est le cas, il est possible d'informer le destinataire que « l'émetteur de l'appel masqué est présent dans le répertoire », ou que l'émetteur est « maman » par exemple.

On note qu'un jeton de contrôle peut être calculé à partir de l'intégralité d'un identifiant du répertoire (par exemple numéro de téléphone). En effet, on ne cherche pas dans ce cas à conserver l'anonymat de l'identifiant, puisque le jeton de contrôle n'a pas vocation à être transmis dans le réseau.

De plus, une protection de l'identité de l'émetteur est réalisée par le fait que son numéro est présent dans le répertoire, donc qu'elle a fait l'objet à un moment ou un autre d'une transmission volontaire de données personnelles de l'émetteur au destinataire.

En particulier, un tel procédé peut mettre en oeuvre une étape de réception d'une graine transmise avec le jeton d'identification. Dans ce cas, la génération de la ou des jetons de contrôle tient également compte de la graine.

Selon une autre variante, la graine n'est pas transmise avec le jeton d'identification, mais est également engendrée côté destinataire. Cela est notamment possible lorsque la graine est composée d'une information variable mais universellement accessible (par exemple heure UTC limitée à la minute).

Selon encore une autre variante, la graine est engendrée par le destinataire, et transmise vers l'amont. Le jeton est alors calculé en amont et transmis à l'appelé.

Selon une autre caractéristique particulière, les étapes de génération et de comparaison tiennent compte d'une fréquence d'appels reçus de la part d'au moins un émetteur dont un identifiant est présent dans le répertoire du destinataire.

De cette façon, il est possible de « hiérarchiser » le calcul du ou des jetons de contrôle, en calculant tout d'abord le jeton de contrôle correspondant à l'identifiant appelant le plus souvent, puis en comparant ce jeton de contrôle au jeton d'identification, et en procédant ainsi de suite tant qu'aucun jeton de contrôle n'a été considéré comme similaire au jeton d'identification.

En particulier, l'étape de génération d'au moins un jeton de contrôle met en oeuvre une fonction de hachage, identique à une fonction de hachage utilisée pour la génération du jeton d'identification.

Selon un autre aspect, l'invention concerne un dispositif de réception d'un appel émis par un émetteur vers un destinataire, selon lequel l'identité de l'émetteur est masquée pour le destinataire, dit appel masqué.

Selon l'invention, un tel dispositif comprend :
- au moins un module de réception de l'appel masqué et d'un jeton non inversible d'identification de l'émetteur, généré à partir d'un identifiant de l'émetteur ;
- un module de génération d'au moins un jeton de contrôle, à partir d'au moins un identifiant présent dans un répertoire du destinataire ;
- un module de comparaison du jeton d'identification et du ou des jetons de contrôle; et
- un module de restitution au destinataire soit d'une information représentant l'identifiant de l'émetteur, soit d'une mention indiquant la présence de l'identifiant de l'émetteur

dans ledit répertoire du destinataire, activé en cas de détection d'au moins une portion identique entre le jeton d'identification et un des jetons de contrôle.

Un tel dispositif de réception est notamment adapté à mettre en oeuvre le procédé de réception décrit précédemment.

Un tel dispositif peut être intégré à un terminal de type téléphone (portable ou fixe), ordinateur (portable ou fixe), tablette, etc.

En particulier, il est adapté à recevoir un appel masqué et un jeton d'identification issus du dispositif de transmission décrit ci-dessus.

Ce dispositif pourra bien sûr comporter les différentes caractéristiques relatives au dispositif de réception selon l'invention, qui peuvent être combinées ou prises isolément. Ainsi, les caractéristiques et avantages de ce dispositif sont les mêmes que ceux du procédé de réception. Par conséquent, ils ne sont pas détaillés plus amplement.

Dans encore un autre mode de réalisation, l'invention concerne un ou plusieurs programmes d'ordinateur comportant des instructions pour la mise en oeuvre d'un procédé de transmission et/ou des instructions pour la mise en oeuvre d'un procédé de réception tels que décrits ci-dessus, lorsque ce ou ces programmes sont exécutés par un processeur.

Dans encore un autre mode de réalisation, l'invention concerne un support d'informations, inamovible, ou partiellement ou totalement amovible, lisible par un ordinateur, et comportant des instructions d'un programme d'ordinateur pour l'exécution des étapes du procédé de transmission ou du procédé de réception tels que décrits ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre deux terminaux souhaitant entrer en communication ;
- la figure 2 présente les principales étapes d'un procédé de transmission selon un mode de réalisation particulier de l'invention ;
- la figure 3 présente les principales étapes d'un procédé de réception selon un mode de réalisation particulier de l'invention ;
- les figures 4 et 5 présentent respectivement la structure simplifiée d'un dispositif de transmission mettant en oeuvre une technique de transmission et la structure simplifiée d'un dispositif de réception mettant en oeuvre une technique de réception selon un mode de réalisation particulier de l'invention.

### 5. Description d'un mode de réalisation de l'invention

### 5.1 Principe général

On se place dans le contexte de la génération d'un appel masqué par un émetteur, c'est-à-dire un appel selon lequel l'identité de l'émetteur est masquée pour le destinataire.

Le principe général de l'invention repose sur la transmission, à un destinataire, d'un jeton d'identification de l'émetteur, permettant au destinataire d'identifier l'émetteur avec une certaine probabilité s'il est connu du destinataire (par exemple si l'émetteur est présent dans le carnet d'adresses / répertoire du destinataire), tout en maintenant le masquage d'identité de l'émetteur.

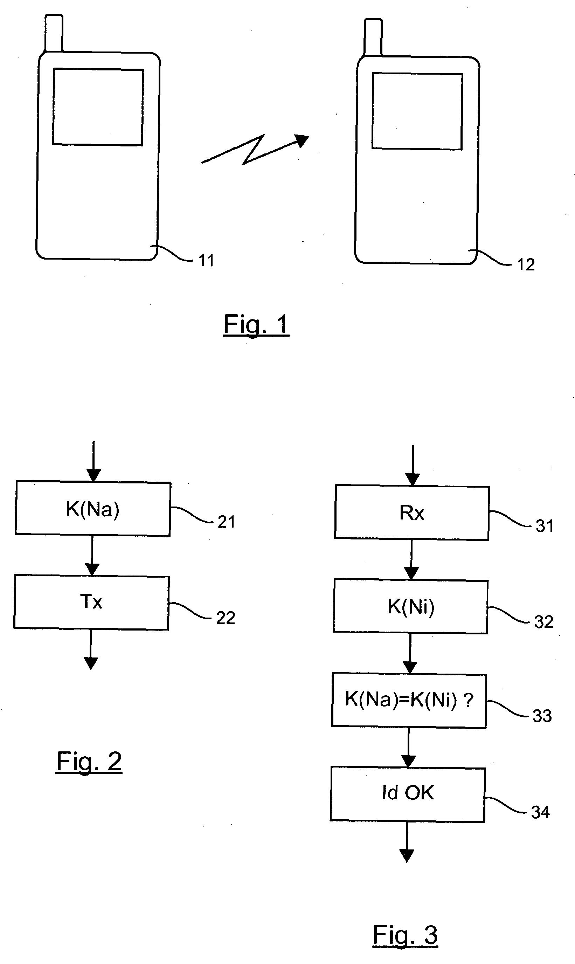

Par exemple, comme illustré en figure 1, un émetteur de type téléphone 11 émet un appel, en masquant son identité, à destination d'un destinataire de type téléphone 12.

Le destinataire 12, recevant un appel masqué, est peu enclin à décrocher.

Selon l'invention, en plus de l'appel masqué, l'émetteur 11 transmet au destinataire 12 un jeton d'identification. A réception de ce jeton d'identification, le destinataire 12 peut déterminer s'il connaît l'émetteur 11, et accepter ou refuser la communication.

On considère selon l'invention que l'émetteur et le destinataire sont des équipements d'un ou plusieurs réseaux, aptes à communiquer entre eux. Il s'agit par exemple de téléphones, tablettes tactiles, ordinateurs, etc. De plus, on entend par « appel » tout type de communication entre ces équipements (communications vocales, textuelles, multimédia (par exemple Skype-marque déposée)...). En particulier, ces communications peuvent utiliser les réseaux IMS (en anglais « IP Multimedia System »), reposant sur l'utilisation du protocole IP. En particulier, les réseaux IMS recourent au protocole de signalisation SIP (« Session Initiation Protocol »), standardisé par l'IETF (« Internet Engineering Task Force », organe de normalisation technique d'Internet).

Ainsi, l'invention propose une nouvelle solution pour la transmission d'un appel masqué à un destinataire, qui peut être proposée sous la forme d'un nouveau service dit de « Qualification d'Identité de Ligne Appelante » (en anglais « Calling Line Identity Check »). Une telle solution ne nécessite pas de dialogue vocal, ni souscription, ni enregistrement de liste blanche, afin de permettre à un émetteur d'appeler un destinataire en maintenant le masquage d'identité, mais en étant pourtant reconnu par lui.

Le principe repose sur la transmission au destinataire d'un jeton non inversible représentant l'émetteur avec une certaine probabilité, et sur la comparaison de ce jeton d'identification avec des jetons de contrôle obtenus pour tous les contacts présents dans le répertoire du destinataire, ou éventuellement uniquement pour les contacts présents dans le répertoire du destinataire abonnés à ce service.

La solution proposée permet ainsi de mettre en relation deux personnes en respectant les exigences de sécurité de chacune.

De plus, elle est transposable à tous types de réseaux disposant de facilité de présentation ou de non présentation d'identité. De même, l'invention dépend du support par les constructeurs de terminaux mais n'induit pas de modification des terminaux existants, qui peuvent fonctionner de manière classique, en ne tenant pas compte du jeton d'identification selon l'invention.

On note par ailleurs que l'invention peut être déployée de manière propriétaire dans un réseau d'opérateur. En particulier, l'invention n'induit pas de contraintes sur les autres services de l'opérateur.

On présente désormais, en relation avec la figure 2, les principales étapes mises en oeuvre par le procédé de transmission d'un appel de l'émetteur 11 vers le destinataire 12 selon l'invention.

Au cours d'une première étape 21, on génère un jeton non inversible d'identification de l'émetteur, à partir d'un identifiant de l'émetteur, notée NA. Pour ce faire, on utilise une fonction à sens unique, afin que le destinataire ne puisse pas retrouver directement l'identité de l'émetteur en appliquant une fonction inverse au jeton d'identification. On note que la génération du jeton d'identification peut être effectuée directement au niveau du terminal émetteur 11, ou bien au niveau d'un équipement tiers du réseau.

Au cours d'une deuxième étape 22, on transmet au destinataire l'appel masqué et le jeton d'identification. Ce jeton d'identification peut être utilisé par le destinataire 12 pour déterminer s'il connaît l'émetteur 11.

Plus précisément, la figure 3 illustre les principales étapes mises en oeuvre par le procédé de réception d'un appel de l'émetteur 11 vers le destinataire 12 selon l'invention.

Au cours d'une première étape 31, le jeton d'identification et l'appel masqué sont reçus par le destinataire 12.

Au cours d'une deuxième étape 32, on génère au moins un jeton de contrôle à partir d'au moins un identifiant présent dans un répertoire du destinataire 12, noté Ni.

Au cours d'une troisième étape 33, on compare le jeton d'identification et le ou les jetons de contrôle.

En cas de comparaison positive, i.e. si on détecte au moins une portion identique entre le jeton d'identification et un des jetons de contrôle, on restitue au destinataire 12 soit une information représentant l'identifiant de l'émetteur 11 (par exemple numéro de téléphone ou nom du contact), soit une mention indiquant la présence de l'identifiant de l'émetteur 11 dans le répertoire du destinataire, au cours d'une quatrième étape 34.

### 5.2 Description d'un mode de réalisation particulier

On décrit ci-après un exemple de réalisation, selon lequel le jeton numérique non inversible d'identification KA est construit (par l'émetteur ou par une entité du réseau), à partir d'un identifiant NA d'un émetteur 11 et d'une graine S. On rappelle que l'utilisation d'une graine S permet de limiter les possibilités de réutilisation du jeton d'identification, notamment par stockage chez le destinataire d'une liste des dernières valeurs reçues.

### 5.2.1 Génération du jeton d'identification

Pour garantir les propriétés de non-inversibilité et de collision, le jeton d'identification KA(NA,S) doit être bâti avec certaines précautions, par exemple en n'utilisant qu'une partie d'un numéro de téléphone de l'émetteur, ou encore en tronquant le résultat de la fonction à sens unique.

Selon cet exemple particulier, le jeton d'identification de l'émetteur KA est construit d'une part en appliquant une fonction de hachage au couple (NA, S), d'autre part en tronquant le résultat obtenu :
KA = troncature (h), avec h = H(NA, S).

On rappelle qu'il est possible par exemple, pour obtenir l'identifiant NA, d'extraire au préalable une sous-chaîne d'une chaîne de caractères associés à l'émetteur (par exemple son numéro de téléphone), en retirant P derniers caractères (par exemple P=2), avant de l'injecter dans la fonction H. Ceci garantit le respect de l'anonymat mais est susceptible provoquer des collisions indésirables, par exemple dans le cas d'une tranche de numéros consécutifs alloués à une entreprise ou à une zone d'habitation ou un numéro court de réseau privé virtuel. Une méthode plus fine est de retirer ou écraser des caractères au milieu de ladite chaîne de caractères (par exemple le chiffre des dizaines de milliers).

La fonction H peut être construite à partir d'une fonction de hachage. Par exemple :
a. H(NA, S) = HASH(S | NA), où HASH désigne par exemple l'algorithme SHA1, SHA2, SHA3 ou SHA256 ; ou
b. H(NA, S) = HMAC(S, NA) avec S jouant le rôle des clés et NA jouant le rôle du message, où HMAC désigne le code d'authentification d'une empreinte cryptographique de message avec clé. Par exemple : H(NA, S) = HASH[(S ⊕opad) | HASH((S ⊕ipad) ⊕NA)],
où le symbole « | » désigne la concaténation, le symbole ⊕ désigne l'addition bit-à-bit, et où les symboles « opad » et « ipad » sont des constantes prédéterminées.

La fonction troncature (h) extrait une sous-chaîne de son argument h. Des caractères peuvent être supprimés au début et/ou à la fin de la chaîne, de manière fixe ou éventuellement aléatoire (par exemple en retirant P caractères au début de la chaîne, Q caractères à la fin de la chaîne), selon l'appel. Le fait de procéder à cette troncature garantit le respect de l'anonymat, puisqu'une collision est en théorie possible. Il ne reste au final qu'un nombre R réduit de caractères consécutifs, par exemple R=5.

Afin d'éviter toute prédictibilité, la graine S peut être construite à partir du temps t (par exemple date et heure courante), et d'un nombre aléatoire r (éventuellement extrait d'un registre aléatoire) : *S = S*(*t,r*)*.* Elle peut être exprimée sous forme de chaîne explicite imprimable (par exemple 1234 12 Octobre 2013 16:55:28) ou selon un format plus compact hexadécimal (123412102013165528 devient 1B672A7257A9FD8).

### 5.2.2 Exemple complet de réalisation de service

On se place ci-après dans un contexte de réseau (ou d'un ensemble de réseaux) de téléphonie IMS basé sur le protocole SIP.

Selon cet exemple, un entête propriétaire noté « x-qualif-id » est ajouté à la signalisation, pour le message INVITE. Sa valeur est : « non », « oui », ou bien la succession des chaînes KA et S.

On considère que la valeur du jeton d'identification KA est dérivée de l'algorithme SHA1 et que la graine S est aléatoire. C'est par exemple une chaîne de quelques caractères.

L'autorisation de qualification d'identité de ligne appelante peut s'effectuer appel par appel, si l'émetteur transmet un entête x-qualif-id valant « oui » ou « non ». L'autorisation peut également être configurée implicitement dans le réseau de manière globale ou encore dans le profil de l'émetteur. La valeur éventuellement reçue dans le message INVITE vient surcharger la valeur configurée pour contribuer à la règle de décision donnée ci-après.

| Autorisation configurée dans le réseau (globale ou, si le réseau de départ est distinct du réseau d'arrivée, éventuellement spécifique au profil de l'émetteur) | Autorisation reçue de x-qualif-id | Décision finale |
|---|---|---|
| « Oui » | « oui » | x-qualif-id= <jeton KA> <graine S> |
| « Oui » | « non » | Pas de transmission de x-qualif-id |
| « Oui » | aucune | x-qualif-id= <jeton KA> <graine S> |
| « Non » | « oui » | x-qualif-id= <jeton KA> <graine S> |
| « Non » | « non » | Pas de transmission de x-qualif-id |
| « Non » | aucune | Pas de transmission de x-qualif-id (ou rien, au choix de l'opérateur) |

Le service proposé peut ainsi être mis en oeuvre soit à la demande par une action volontaire de l'émetteur, soit de manière permanente préconfigurée dans le réseau à la demande expresse du destinataire par souscription. Ainsi, l'émetteur garde par défaut la possibilité de masquer totalement son identité s'il le souhaite.

En particulier, lorsque le service est mis en oeuvre à la demande, l'émetteur doit acheminer dans la signalisation un indicateur adéquat autorisant le calcul du jeton d'identification par le réseau et sa transmission à un destinataire (typiquement réservé à d'anciens terminaux).

Dans les deux cas (permanent ou à la demande), l'indicateur et le couple (S, KA) sont transmis dans la signalisation, et peuvent l'être en particulier à l'interconnexion entre deux réseaux. Si elle n'est pas fournie en amont, la valeur du jeton d'identification peut être calculée par le ou les réseaux, si les accords entre les opérateurs le permettent, par exemple au plus près du destinataire.

Le service est par construction compatible avec les autres services du réseau. Dans le cas d'un procédé d'appel qui mettrait en oeuvre un changement de l'identité de l'appelant en cours de route, le service qui opère cette modification peut ou non supprimer la signalisation supplémentaire selon l'invention.

En particulier, on note qu'il doit être possible d'inhiber sur un terminal la mise en oeuvre du service, en départ comme en arrivée.

La construction du jeton d'identification KA s'effectue ici plutôt dans le réseau de départ. En effet, selon la politique de sécurité de l'opérateur, le secret d'appel est géré dans les réseaux IMS en masquant (par remplacement d'une chaîne fixe) ou non l'identité privée dès le réseau de départ. Si tel est le cas, ceci ne permet pas de garantir le service dans le réseau d'arrivée, puisque ce dernier réseau ne dispose plus de l'identité de l'appelant.

On considère par exemple que l'émetteur est Alice, de numéro E164 +33296106155, et que le destinataire est Bernard, de numéro E164 +33950131054.

Le terminal d'Alice invoque par exemple explicitement le service en ajoutant l'entête « x-qualif-id= oui » en même temps que le service de masquage d'identité (« header SIP Privacy »), dans un message INVITE. On note que le résultat aurait été similaire si le terminal d'Alice n'avait rien signalé (i.e. pas d'entête x-qualif-id), mais que le réseau autorisait par défaut le service.

Selon cet exemple, la génération du jeton d'identification de l'émetteur est effectuée au niveau d'une entité du réseau de départ.

Pour ce faire, l'entité du réseau récupère le numéro appelant exprimé, ici au format E.164. Ce numéro est par exemple extrait de l'identité privée, disponible dans le champ « From » (« de ») : From: <sip:+330296106155@172.20.74.194>.

On obtient ainsi un identifiant de l'émetteur NA= «+330296106155».

On note que cet identifiant peut également être obtenu par d'autres moyens (lien fait par le réseau entre identité publique certifiée avec l'identité privée).

On choisit dans cet exemple simplifié de ne pas tronquer le numéro d'identifiant ainsi obtenu.

L'entité du réseau génère également une graine S. Dans cet exemple simplifié, S est construite à partir du couple (date, heure). Par exemple, S= «12 Octobre 2013 16:55:28».

L'entité du réseau applique alors une fonction de hachage au couple (NA,S), puis une fonction de troncature au condensé obtenu. Selon cet exemple, pour garantir des collisions, on concatène S | NA, on applique SHA1, et on retire 17 caractères au début et 16 autres caractères à la fin de la chaîne de caractères obtenue. Il s'agit ici d'un choix arbitraire et aléatoire, dépendant de l'appel.

Ainsi, si l'on considère le texte d'entrée suivant, formé de la concaténation de la graine S et de l'identifiant NA :
Texte d'entrée : 12 Octobre 2013 16:55:28+33296106155,
   on obtient en sortie de la fonction de hachage :
Résultat SHA1: 68e2d03501daba37a25720e9cb77e84af05a0a96
   puis en sortie de la fonction de troncature :
   Résultat SHA1 tronqué : KA = 25720e9 (tronqué de 17+16=33 caractères).

Le résultat obtenu correspond au jeton d'identification de l'émetteur. Il peut être injecté dans l'entête « x-qualif-id », avec la graine, pour transmission à Bernard : x-qualif-id: «25720e9" "12 Octobre 2013 16:55:28»

Plus précisément, le message SIP est retransmis vers Bernard (destinataire), en anonymisant l'identité privée.

### From: "Anonymous" <sip:anonymous@anonymous.invalid>

### x-qualif-id: «25720e9" "12 Octobre 2013 16:55:28»

Le terminal de Bernard reçoit l'appel masqué, ainsi que le jeton d'identification et la graine présents dans l'entête x-qualif-id.

A la réception de l'appel, le terminal de Bernard effectue une série de calculs à partir des identifiants Ni présents dans son répertoire. Plus précisément, le terminal appelé détermine des jetons de contrôle associés aux différents identifiants présents dans son carnet d'adresse, en appliquant la fonction de hachage H= SHA1(S | Ni) pour chacun des numéros Ni du carnet d'adresse du terminal de Bernard.

| Qui | Carnet d'adresse | SHA1 (S \| NA) résultant (jeton de contrôle) |
|---|---|---|
| Daniel | +33145295750 | 80939d5b3115c68b6442d8f7acc75638628cf727 |
| Loïc | +33169284275 | 0bae4d53ddc85f615f8488ef1579a7cef8f1614d |
| Alice | +33296106155 | 68e2d03501daba37a25720e9cb77e84af05a0a96 |
| Marion | +33296106153 | 540be3f89456278aad8b5a2adb78cadf56f4f892 |
| Guy | +33169284274 | f41219e7c1faf157b21ff2347362c9524bef6c31 |
| etc. | | |

Le terminal de Bernard compare alors les jetons de contrôle obtenus au jeton d'identification, et constate que la valeur de K=25720e9 présente dans l'entête « x-qualif-id » est une sous-chaîne de la troisième ligne (Alice). Il peut donc présumer que l'appelant est Alice mais sans pouvoir le prouver. L'identité présumée (nom ou numéro) est alors affichée sur le terminal de Bernard, avec optionnellement une mention indiquant son caractère non certain (par exemple nom ou suite de chiffres suivi d'un point d'interrogation). On peut également afficher le simple fait que l'identité est détectée dans le répertoire, par exemple au moyen d'un message de type « numéro masqué (présent dans votre répertoire) ».

On remarque que sur un répertoire de taille peu importante comme celui d'un particulier (qui contient en général moins de deux cent numéros), la probabilité relative de collision dans le répertoire doit être négligeable afin de ne pas occasionner de confusion chez les usagers. Elle le sera dans la pratique dans la mesure où une proportion peu importante d'usagers se présente avec un numéro masqué, et où le terminal peut procéder par auto-apprentissage, en examinant successivement :
- les identités de nature de présentation non déterminable (service d'identification du demandeur en phase d'appel possible ou non - en anglais CLIP pour « calling line identification présentation »),
- les identités qu'il sait avoir vu présenter explicitement (CLIP) récemment, par exemple en exploitant le journal des appels.

On note que d'autres mises en oeuvre qu'un entête spécifique sont possibles, comme par exemple un paramètre spécifique dans un champ d'identité existant.

De plus, il est possible d'exprimer la graine selon un format plus compact, comme le format hexadécimal.

Enfin, le cas d'interfonctionnement avec d'autres réseaux basés par exemple sur des signalisations circuit n'est pas décrit en détail, mais peut-être imaginé en fonction des extensions de protocole disponibles, ou d'éléments spécifiques de l'opérateur.

A l'entrée dans le réseau IMS, si l'entête x-qualif-id (ou son équivalent dans le protocole du réseau interconnecté) n'est pas fourni, mais que l'identité de l'émetteur est encore disponible (assortie d'une indication de non divulgation), on peut alors engendrer l'entête x-qualif-id.

### 5.3 Description des dispositifs de transmission et de réception selon l'invention

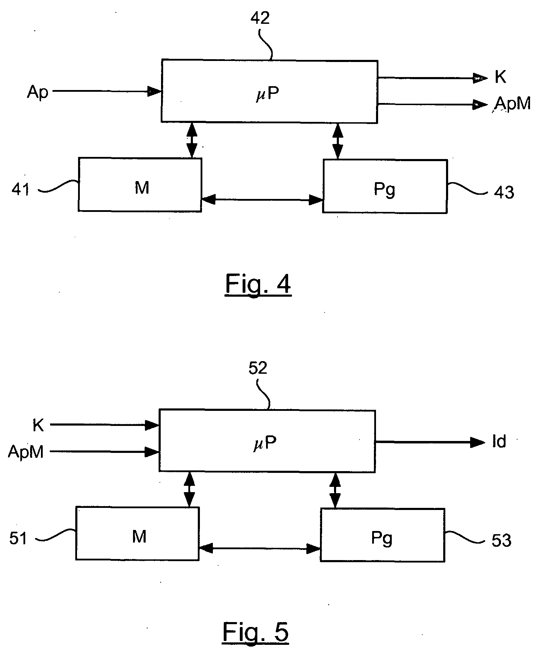

On présente finalement, en relation avec les figures 4 et 5 respectivement, la structure simplifiée d'un dispositif de transmission mettant en oeuvre une technique de transmission d'un appel masqué et la structure d'un dispositif de réception mettant en oeuvre une technique de réception d'un appel masqué selon un mode de réalisation particulier de l'invention.

Comme illustré en figure 4, un tel dispositif de transmission comprend une mémoire 41 comprenant une mémoire tampon, une unité de traitement 42, équipée par exemple d'un microprocesseur µP, et pilotée par le programme d'ordinateur 43, mettant en oeuvre le procédé de transmission selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée un appel Ap à transmettre. Le microprocesseur de l'unité de traitement 42 met en oeuvre les étapes du procédé de transmission décrit précédemment, selon les instructions du programme d'ordinateur 43, pour générer le jeton d'identification, et transmettre l'appel masqué ApM et le jeton d'identification K (et éventuellement la graine) à un destinataire. Pour cela, le dispositif de transmission comprend, outre la mémoire tampon 41, un module de génération d'un jeton non inversible d'identification de l'émetteur, à partir d'un identifiant de l'émetteur, et au moins un module de transmission au destinataire de l'appel masqué et du jeton d'identification. Ces modules sont pilotés par le microprocesseur de l'unité de traitement 42.

Comme illustré en figure 5, un tel dispositif de réception d'un appel masqué comprend quant à lui une mémoire 51 comprenant une mémoire tampon, une unité de traitement 52, équipée par exemple d'un microprocesseur µP, et pilotée par le programme d'ordinateur 53, mettant en oeuvre le procédé de réception d'un appel masqué selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un appel masqué ApM, ainsi que le jeton d'identification K. Le microprocesseur de l'unité de traitement 52 met en oeuvre les étapes du procédé de réception décrit précédemment, selon les instructions du programme d'ordinateur 53, pour déterminer des jetons de contrôle associés aux identifiants d'un répertoire du destinataire, comparer ces jetons de contrôle au jeton d'identification, et détecter si l'un des jetons de contrôle correspond au jeton d'identification.

Pour cela, le dispositif de réception comprend, outre la mémoire tampon 51, au moins un module de réception de l'appel masqué et d'un jeton non inversible d'identification de l'émetteur, généré à partir d'un identifiant de l'émetteur, un module de génération d'au moins un jeton de contrôle, à partir d'au moins un identifiant présent dans un répertoire du destinataire, un module de comparaison du jeton d'identification et du ou des jetons de contrôle, et un module de restitution au destinataire soit d'une information représentant l'identifiant de l'émetteur, soit d'une mention indiquant la présence de l'identifiant de l'émetteur dans le répertoire du destinataire, activé en cas de détection d'au moins une portion identique entre le jeton d'identification et un des jetons de contrôle. Ces modules sont pilotés par le microprocesseur de l'unité de traitement 52.

## Revendications

1. Procédé de transmission d'un appel d'un émetteur (A) vers un destinataire (B), selon lequel l'identité dudit émetteur est masquée pour ledit destinataire, dit appel masqué,
**caractérisé en ce qu'**il met en oeuvre les étapes suivantes :
- génération (21) d'un jeton non inversible d'identification dudit émetteur, à partir d'un identifiant dudit émetteur ; et
- transmission (22) audit destinataire dudit appel masqué et dudit jeton d'identification.

2. Procédé de transmission selon la revendication 1, **caractérisé en ce que** ledit identifiant de l'émetteur est le numéro de téléphone de l'émetteur ou une partie de ce numéro.

3. Procédé de transmission selon l'une quelconque des revendications 1 et 2, **caractérisé en ce que** ladite étape de génération (21) d'un jeton d'identification tient également compte d'une graine.

4. Procédé de transmission selon la revendication 3, **caractérisé en ce qu'**une nouvelle graine est générée à chaque nouvel appel à transmettre.

5. Procédé de transmission selon l'une quelconque des revendications 1 à 4, **caractérisé en ce que** ladite étape de génération met en oeuvre une fonction de hachage, délivrant un condensé représentatif d'un identifiant dudit émetteur.

6. Dispositif de transmission d'un appel d'un émetteur (A) vers un destinataire (B), selon lequel l'identité dudit émetteur est masquée pour ledit destinataire, dit appel masqué,
**caractérisé en ce qu'**il comprend :
- un module de génération d'un jeton non inversible d'identification dudit émetteur, à partir d'un identifiant dudit émetteur ; et
- au moins un module de transmission audit destinataire dudit appel masqué et dudit jeton d'identification.

7. Terminal **caractérisé en ce qu'**il comprend un dispositif de transmission selon la revendication 6.

8. Signal de transmission d'un appel d'un émetteur (A) vers un destinataire (B), selon lequel l'identité dudit émetteur est masquée pour ledit destinataire, dit appel masqué,
**caractérisé en ce qu'**il comprend un champ spécifique portant au moins un jeton non inversible d'identification dudit émetteur, généré à partir d'un identifiant dudit émetteur, et **en ce qu'**il porte ledit appel masqué.

9. Procédé de réception d'un appel émis par un émetteur (A) vers un destinataire (B), selon lequel l'identité dudit émetteur est masquée pour ledit destinataire, dit appel masqué,
**caractérisé en ce qu'**il met en oeuvre les étapes suivantes :
- réception (31) dudit appel masqué et d'un jeton non inversible d'identification dudit émetteur, généré à partir d'un identifiant dudit émetteur ;
- génération (32) d'au moins un jeton de contrôle, à partir d'au moins un identifiant présent dans un répertoire dudit destinataire ;
- comparaison (33) dudit jeton d'identification et dudit au moins un jeton de contrôle ; et
- en cas de détection d'au moins une portion identique entre ledit jeton d'identification et un desdits jetons de contrôle, restitution (34) audit destinataire soit d'une information représentant ledit identifiant de l'émetteur, soit d'une mention indiquant la présence dudit identifiant de l'émetteur dans ledit répertoire du destinataire.

10. Procédé de réception selon la revendication 9, **caractérisé en ce que** ladite étape de génération tient également compte d'une graine.

11. Procédé de réception selon l'une quelconque des revendications 9 et 10, **caractérisé en ce que** ladite étape de génération d'au moins un jeton de contrôle met en oeuvre une fonction de hachage, identique à une fonction de hachage utilisée pour la génération dudit jeton d'identification.

12. Dispositif de réception d'un appel émis par un émetteur (A) vers un destinataire (B), selon lequel l'identité dudit émetteur est masquée pour ledit destinataire, dit appel masqué,
**caractérisé en ce qu'**il comprend :
- au moins un module de réception dudit appel masqué et d'un jeton non inversible d'identification dudit émetteur, généré à partir d'un identifiant dudit émetteur;
- un module de génération d'au moins un jeton de contrôle, à partir d'au moins un identifiant présent dans un répertoire dudit destinataire ;
- un module de comparaison dudit jeton d'identification et dudit au moins un jeton de contrôle ; et
- un module de restitution audit destinataire soit d'une information représentant ledit identifiant de l'émetteur, soit d'une mention indiquant la présence dudit identifiant de l'émetteur dans ledit répertoire du destinataire, activé en cas de détection d'au moins une portion identique entre ledit jeton d'identification et un desdits jetons de contrôle.

13. Terminal **caractérisé en ce qu'**il comprend un dispositif de réception selon la revendication 12.

14. Programme d'ordinateur comportant des instructions pour la mise en oeuvre d'un procédé de transmission selon la revendication 1 ou d'un procédé de réception selon la revendication 9 lorsque ce programme est exécuté par un processeur.

15. Support d'informations, inamovible, ou partiellement ou totalement amovible, lisible par un ordinateur, et comportant des instructions d'un programme d'ordinateur pour l'exécution des étapes d'un procédé de transmission selon la revendication 1 ou d'un procédé de réception selon la revendication 9.

## Patentansprüche

1. Verfahren zum Übertragen eines Anrufs eines Senders (A) an einen Empfänger (B), wobei die Identität des Senders für den Empfänger versteckt wird, eines sogenannten versteckten Anrufs, **dadurch gekennzeichnet, dass** es die folgenden Schritte umsetzt:
- Generieren (21), ausgehend von einer Kennung des Senders, eines nicht umkehrbaren Identifikationstokens des Senders; und
- Übertragen (22) des versteckten Anrufs und des Identifikationstokens an den Empfänger.

2. Verfahren zum Übertragen nach Anspruch 1, **dadurch gekennzeichnet, dass** die Kennung des Senders die Telefonnummer des Senders oder ein Teil dieser Nummer ist.

3. Verfahren zum Übertragen nach einem der Ansprüche 1 und 2, **dadurch gekennzeichnet, dass** der Schritt des Generierens (21) eines Identifikationstokens ebenfalls einen Startwert berücksichtigt.

4. Verfahren zum Übertragen nach Anspruch 3, **dadurch gekennzeichnet, dass** ein neuer Startwert bei jedem neuen zu übertragenden Anruf generiert wird.

5. Verfahren zum Übertragen nach einem der Ansprüche 1 bis 4, **dadurch gekennzeichnet, dass** der Schritt des Generierens eine Hashfunktion umsetzt, die ein Kondensat liefert, das für eine Kennung des Senders repräsentativ ist.

6. Vorrichtung zum Übertragen eines Anrufs eines Senders (A) an einen Empfänger (B), wobei die Identität des Senders für den Empfänger versteckt ist, eines sogenannten versteckten Anrufs, **dadurch gekennzeichnet, dass** sie Folgendes aufweist:
- ein Modul zum Generieren, ausgehend von einer Kennung des Senders, eines nicht umkehrbaren Identifikationstokens des Senders; und
- mindestens ein Modul zum Übertragen des versteckten Anrufs und des Identifikationstokens an den Empfänger.

7. Endgerät, **dadurch gekennzeichnet, dass** es eine Vorrichtung zum Übertragen nach Anspruch 6 aufweist.

8. Signal zum Übertragen eines Anrufs eines Senders (A) an einen Empfänger (B), wobei die Identität des Senders für den Empfänger versteckt ist, eines sogenannten versteckten Anrufs,
**dadurch gekennzeichnet, dass** es ein spezifisches Feld aufweist, das mindestens einen nicht umkehrbaren Identifikationstoken des Senders trägt, der ausgehend von einer Kennung des Senders generiert ist, und dass es den versteckten Anruf trägt.

9. Verfahren zum Empfangen eines Anrufs, der von einem Sender (A) an einen Empfänger (B) ausgesendet wird, wobei die Identität des Senders für den Empfänger versteckt wird, eines sogenannten versteckten Anrufs, **dadurch gekennzeichnet, dass** es die folgenden Schritte umsetzt:
- Empfangen (31) des versteckten Anrufs und eines nicht umkehrbaren Identifikationstokens des Senders, der ausgehend von einer Kennung des Senders generiert wird;
- Generieren (32), ausgehend von mindestens einer Kennung, die in einem Verzeichnis des Empfängers vorhanden ist, von mindestens einem Kontrolltoken;
- Vergleichen (33) des Identifikationstokens und des mindestens einen Kontrolltokens; und
- im Falle des Entdeckens von mindestens einem gleichen Abschnitt zwischen dem Identifikationstoken und einem der Kontrolltoken, Restituieren (34) an den Empfänger sowohl einer Information, die die Kennung des Senders darstellt, als auch einer Angabe, die das Vorhandensein der Kennung des Senders in dem Verzeichnis des Empfängers angibt.

10. Verfahren zum Empfangen nach Anspruch 9, **dadurch gekennzeichnet, dass** der Schritt des Generierens ebenfalls einen Startwert berücksichtigt.

11. Verfahren zum Empfangen nach einem der Ansprüche 9 und 10, **dadurch gekennzeichnet, dass** der Schritt des Generierens von mindestens einem Kontrolltoken eine Hashfunktion umsetzt, die mit einer Hashfunktion identisch ist, die zum Generieren des Identifikationstokens verwendet wird.

12. Vorrichtung zum Empfangen eines Anrufs, der von einem Senders (A) an einen Empfänger (B) ausgesendet wird, wobei die Identität des Senders für den Empfänger versteckt ist, eines sogenannten versteckten Anrufs, **dadurch gekennzeichnet, dass** sie Folgendes aufweist:
- mindestens ein Modul zum Empfangen des versteckten Anrufs und eines nicht umkehrbaren Identifikationstokens des Senders, der ausgehend von einer Kennung des Senders generiert wird;
- ein Modul zum Generieren, ausgehend von mindestens einer Kennung, die in einem Verzeichnis des Empfängers vorhanden ist, von mindestens einem Kontrolltoken;
- ein Modul zum Vergleichen des Identifikationstokens und des mindestens einen Kontrolltokens; und
- ein Modul zum Restituieren an den Empfänger sowohl einer Information, die die Kennung des Senders darstellt, als auch einer Angabe, die das Vorhandensein der Kennung des Senders in dem Verzeichnis des Empfängers angibt, das im Falle des Entdeckens von mindestens einem gleichen Abschnitt zwischen dem Identifikationstoken und einem der Kontrolltoken aktiviert wird.

13. Endgerät, **dadurch gekennzeichnet, dass** es eine Vorrichtung zum Empfangen nach Anspruch 12 aufweist.

14. Computerprogramm, das Anweisungen zum Umsetzen eines Verfahrens zum Übertragen nach Anspruch 1 oder eines Verfahrens zum Empfangen nach Anspruch 9 aufweist, wenn dieses Programm von einem Prozessor ausgeführt wird.

15. Nicht abnehmbarer oder teilweise oder vollständig abnehmbarer Informationsträger, der von einem Computer lesbar ist und Anweisungen eines Computerprogramms zum Umsetzen der Schritte eines Verfahrens zum Übertragen nach Anspruch 1 oder eines Verfahrens zum Empfangen nach Anspruch 9 aufweist.

## Claims

1. Method for transmitting a call from a sender (A) to a recipient (B), according to which the identity of the said sender is hidden for the said recipient, termed a hidden call, **characterized in that** it implements the following steps:
- generation (21) of a non-invertible token for identifying the said sender, on the basis of an identifier of the said sender; and
- transmission (22) of the said hidden call and of the said identifying token to the said recipient.

2. Transmitting method according to Claim 1, **characterized in that** the said identifier of the sender is the telephone number of the sender or a part of this number.

3. Transmitting method according to either one of Claims 1 and 2, **characterized in that** the said step (21) of generating an identifying token also takes account of a seed.

4. Transmitting method according to Claim 3, **characterized in that** a new seed is generated with each new call to be transmitted.

5. Transmitting method according to any one of Claims 1 to 4, **characterized in that** the said generating step implements a hash function, delivering a digest representative of an identifier of the said sender.

6. Device for transmitting a call from a sender (A) to a recipient (B), according to which the identity of the said sender is hidden for the said recipient, termed a hidden call, **characterized in that** it comprises:
- a module for generating a non-invertible token for identifying the said sender, on the basis of an identifier of the said sender; and
- at least one module for transmitting the said hidden call and the said identifying token to the said recipient.

7. Terminal **characterized in that** it comprises a transmitting device according to Claim 6.

8. Signal for transmitting a call from a sender (A) to a recipient (B), according to which the identity of the said sender is hidden for the said recipient, termed a hidden call,
**characterized in that** it comprises a specific field carrying at least one non-invertible token for identifying the said sender, generated on the basis of an identifier of the said sender, and **in that** it carries the said hidden call.

9. Method for receiving a call sent by a sender (A) to a recipient (B), according to which the identity of the said sender is hidden for the said recipient, termed a hidden call, **characterized in that** it implements the following steps:
- reception (31) of the said hidden call and of a non-invertible token for identifying the said sender, generated on the basis of an identifier of the said sender;
- generation (32) of at least one control token, on the basis of at least one identifier present in a directory of the said recipient;
- comparison (33) of the said identifying token and of the said at least one control token; and
- in case of detection of at least one identical portion between the said identifying token and one of the said control tokens, return (34) to the said recipient either of an item of information representing the said identifier of the sender, or of a cue indicating the presence of the said identifier of the sender in the said directory of the recipient.

10. Receiving method according to Claim 9, **characterized in that** the said generating step also takes account of a seed.

11. Receiving method according to either one of Claims 9 and 10, **characterized in that** the said step of generating at least one control token implements a hash function, identical to a hash function used for generating the said identifying token.

12. Device for receiving a call sent by a sender (A) to a recipient (B), according to which the identity of the said sender is hidden for the said recipient, termed a hidden call, **characterized in that** it comprises:
- at least one module for receiving the said hidden call and a non-invertible token for identifying the said sender, generated on the basis of an identifier of the said sender;
- a module for generating at least one control token, on the basis of at least one identifier present in a directory of the said recipient;
- a module for comparing the said identifying token and the said at least one control token; and
- a module for returning to the said recipient either an item of information representing the said identifier of the sender, or a cue indicating the presence of the said identifier of the sender in the said directory of the recipient, activated in case of detection of at least one identical portion between the said identifying token and one of the said control tokens.

13. Terminal **characterized in that** it comprises a receiving device according to Claim 12.

14. Computer program comprising instructions for the implementation of a transmitting method according to Claim 1 or of a receiving method according to Claim 9 when this program is executed by a processor.

15. Non-removable or partially or totally removable information medium, readable by a computer, and comprising instructions of a computer program for the execution of the steps of a transmitting method according to Claim 1 or of a receiving method according to Claim 9.
